# EUROPEAN PATENT SPECIFICATION

(11) **EP 3 584 631 B1**
(45) Date of publication and mention of the grant of the patent: **26.01.2022**
(21) Application number: 17896430.0
(22) Date of filing: 17.03.2017
(51) Int. Cl.: G02F 1/1368, G02F 1/1362, G02F 1/133, G09G 3/36

(54) **LCD ARRAY SUBSTRATE, LCD PANEL, AND LCD PIXEL CIRCUIT**
LCD-ARRAYSUBSTRAT, LCD-TAFEL UND LCD-PIXELSCHALTUNG
SUBSTRAT DE RÉSEAU D'AFFICHAGE À CRISTAUX LIQUIDES, PANNEAU D'AFFICHAGE À CRISTAUX LIQUIDES ET CIRCUIT DE PIXELS D'AFFICHAGE À CRISTAUX LIQUIDES

(30) Priority: 15.02.2017 CN 201710082276
(43) Date of publication of application: 25.12.2019
(73) Proprietor: Shenzhen China Star Optoelectronics Technology Co. Ltd., Shenzhen, Guangdong 518132 (CN)
(72) Inventor: AN, Liyang, ShenZhen Guangdong 518132 (CN)
(74) Representative: Retter, Jocelyn Anna
(86) International application number: PCT/CN2017/077090
(87) International publication number: WO 2018/149012

(56) References cited:
- CN-A- 1 624 536
- CN-A- 102 169 264
- CN-A- 102 610 205
- JP-A- 2005 274 859
- JP-A- 2008 304 659
- US-A1- 2003 169 223
- US-A1- 2005 185 108
- US-A1- 2010 103 085
- US-A1- 2011 169 018

## Description

### Field of the Invention

The present invention relates to the technical field of liquid crystal display technology, and more particularly to an LCD array substrate, an LCD panel and an LCD pixel circuit.

### Description of the Related Art

An LCD (Liquid Crystal Display) uses the change of electric field strength on liquid crystal molecules to change the orientation of the liquid crystal molecules so as to control the strength of light to display images. Currently, a liquid crystal display apparatus has been widely used in terminal display devices having any sizes due to its features of light-weight, small-volume and thin-thickness. An LCD is mainly formed by an array substrate and a color-filter substrate. The array substrate is provided with gate lines, data lines, pixel electrodes and thin-film transistors. Each of the pixel electrodes is controlled by the corresponding thin-film transistor. When the thin-film transistor is turned on, the pixel electrode is being charged during the turned-on time. After the thin-film transistor is turned off, the pixel electrode maintains its voltage until next scanning for recharging.

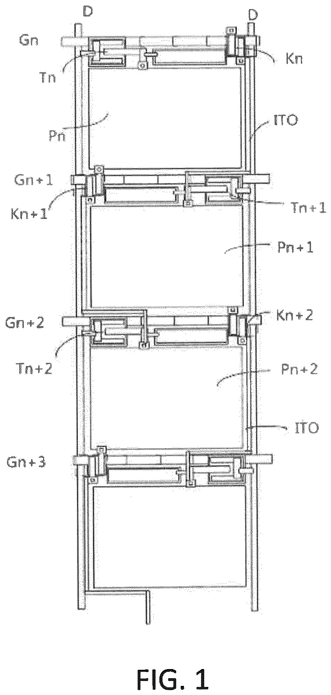

Due to a voltage coupling effect of the thin-film transistors, at the moment when an electric potential of a gate signal decreases from a high level, a pixel charging voltage will have a change of a voltage difference ΔV. ΔV means a feed-through voltage. In general, a feed-through phenomenon is a problem that a liquid crystal panel may often encounter. The existence of feed-through phenomenon will cause a brightness difference between a frame of positive polarity frame and a frame of negative polarity, and then cause the panel to have a flicker problem and increase the risk of image sticking. Therefore, the feed-through voltage needs to be reduced by all means when designing the panel. The influence of a feed-through phenomenon performed on the pixel electric potential may be referred to ΔV=(V_{off}-Vₒₙ) · C_{gs}/Cₜₒₜₐₗ, wherein V_{off} and Vₒₙ are a turn-off voltage and a turn-on voltage of a scanning line as shown in Fig. 1; Cₜₒₜₐₗ is the capacitor of the pixel electrode which generally includes three capacitors: Cₜₒₜₐₗ =C_{gs} (parasitic capacitor of a TFT)+Cst (storage capacitor)+C_{lc} (liquid crystal capacitor). It can be seen from the foregoing formula that the value of ΔV can be lower by reducing C_{gs} or increasing Cₜₒₜₐₗ. Generally, the feed-through voltage is reduced by a way of increasing Cst. The larger Cst is, the less the amount of voltage coupling is. However, Cst is usually limited by conditions such as an aperture ratio and thus cannot be made larger.

Therefore, the conventional technologies still have defects, and require more improvements.

US 2010/0103085 A1 discloses a horizontal electric filed liquid crystal display (LCD) including a first liquid crystal cell driven by a voltage difference between a first pixel electrode and a second pixel electrode, a second liquid crystal cell driven by a voltage difference between a third pixel electrode and a fourth pixel electrode, a first data line to which a first analog data voltage is supplied, a second data line to which a second analog data voltage and a fourth analog data voltage are supplied, a third data line to which a third analog data voltage is supplied, a first gate line that receives a first scan pulse to select the first liquid crystal cell, a second gate line that receives a second scan pulse to select the second liquid crystal cell, first, second, third, and fourth thin film transistors. The second pixel electrode is spaced apart from the second gate line, and the fourth pixel electrode is spaced apart from the first gate line.

US 2005/185108 A1 discloses a liquid crystal display device that comprises a plurality of gate lines formed in parallel to each other, a plurality of source lines formed in parallel to each other and orthogonal to the gate lines, an array of cells formed in rows and columns, each of the cells being formed near an intersection of one of the gate lines and one of the source lines, a first transistor of each of the cells disposed at an N-th row and M-th column, N and M being integers, driven by an (N-2)-th gate line, and a second transistor of the each of the cells driven by an N-th gate line.

JP 2005 274859 A discloses a display device and drive control method therefor, in which a plurality of liquid crystal display pixels Px, arrayed in two dimensions in a liquid crystal display panel, each have a pixel transistor TFT which has its control terminal connected between a scanning line SLa by connecting a current path between a pixel electrode and a data line DL, an auxiliary transistor TFT which has its control terminal connected to a scanning line Slb by connecting a current path between the pixel electrode and an open end, and a pixel capacitor Clc composed of liquid crystal molecules charged between the pixel electrode and common electrode.

### SUMMARY OF THE INVENTION

An objective of the present invention is to provide an LCD array substrate and an LCD pixel circuit so as to solve the problem that the feed-through voltage may influence display quality in the conventional technology.

According to a first aspect, the present invention provides an LCD array substrate according to claim 1 and inter alia including: a substrate and a plurality of gate lines and data lines, wherein the gate lines and the data lines are crossed with each other to form a plurality of pixel units and the gate lines (Gₙ, Gₙ₊₁, Gₙ₊₂, Gₙ₊₃) define the row and the data lines (D) define the columns of the LCD array; each of the pixel units is provided with a pixel electrode, a first thin-film transistor, and a connecting switch; the first thin-film transistor (Tₙ, Tₙ₊₁, Tₙ₊₂, Tₙ₊₃) is connected to the corresponding gate line, the corresponding data line, and the pixel electrode; the connecting switch is connected to the corresponding gate line (Gₙ, Gₙ₊₁, Gₙ₊₂, Gₙ₊₃), a pixel electrode of one pixel unit which is at the same column and at a preceding row in relation to the pixel unit where the connecting switch belongs and a pixel electrode of another pixel unit which is at the same column and at a following row in relation to the pixel unit where the connecting switch belongs; the connecting switch is adapted to electrically connect and disconnect the pixel electrode of the one pixel unit and the pixel electrode of the another pixel unit.

In the LCD array substrate of the present invention, the connecting switch is a second thin-film transistor; a gate of the second thin-film transistor is connected to a gate line in the pixel unit where the second thin-film transistor belongs, a source thereof is connected to a pixel electrode of an adjacent pixel unit which is at the same column and at a preceding row, and a drain thereof is connected to a pixel electrode of another adjacent pixel unit which is at the same column and at a following row.

In the LCD array substrate of the present invention, each of the pixel units is further provided with metallic lines; the source of the second thin-film transistor is connected to the pixel electrode of the adjacent pixel unit which is at the same column and at a preceding row through one of the metallic lines; the drain of the second thin-film transistor is connected to the pixel electrode of another adjacent pixel unit which is at the same column and at a following row through another one of the metallic lines.

In the LCD array substrate of the present invention, each of the pixel units further includes an M2 metal layer; the metallic lines are M2 metallic lines; the metallic lines are mounted in the same layer with the M2 metal layer.

The present invention further provides an LCD panel, the LCD panel includes a color-filter substrate, a liquid crystal layer, and an LCD array substrate; the color-filter substrate is mounted opposite to the LCD array substrate; the liquid crystal layer is mounted between the color-filter substrate and the LCD array substrate; the LCD array substrate includes a substrate and a plurality of gate lines and data lines, wherein the gate lines and the data lines are crossed with each other to form a plurality of pixel units; each of the pixel units is provided with a pixel electrode, a first thin-film transistor, and a connecting switch controlled by the corresponding gate line; the connecting switch is controlled to be turned on so that the pixel electrode of one pixel unit which is at the same column and at a preceding row in relation to the pixel unit where the connecting switch belongs and the pixel electrode of another pixel unit which is at the same column and at a following row in relation to the pixel unit where the connecting switch belongs are electrically connected.

The present invention further provides an LCD pixel circuit according to claim 6 and inter alia including: a plurality of gate lines, a plurality data lines, a plurality of pixel units defined by the gate lines and the data lines being crossed with each other, wherein the gate lines (Gₙ, Gₙ₊₁, Gₙ₊₂, Gₙ₊₃) define the row and the data lines (D) define the columns of the LCD array; each of the pixel units includes: a first thin-film transistor, a capacitor; the capacitor is connected to one of the data lines through the first thin-film transistor and to the drain of the first thin-film transistor (Tₙ, Tₙ₊₁, Tₙ₊₂, Tₙ₊₃); each of the pixel units further includes: a connecting switch that controls the connection or disconnection of the drain of the first thin-film transistor of an adjacent pixel unit which is at the same column and at a preceding row in relation to the pixel unit where the connecting switch belongs and the drain of the first thin-film transistor of another adjacent pixel unit which is at the same column and at a following row in relation to the pixel unit where the connecting switch belongs according to the gate signal on the corresponding gate line (Gₙ, Gₙ₊₁, Gₙ₊₂, Gₙ₊₃).

In the LCD pixel circuit of the present invention, the connecting switch is a second thin-film transistor; a gate of the second thin-film transistor is connected to a gate line in the pixel unit where the second thin-film transistor belongs, a source thereof is connected to a drain of a first thin-film transistor of an adjacent pixel unit which is at the same column and at a preceding row, and a drain of the second thin-film transistor is connected to a drain of a first thin-film transistor of another adjacent pixel unit which is at the same column and at a following row.

In the LCD pixel circuit of the present invention, wherein the second thin-film transistor is configured to be turned on by an input with a high electric potential to the gate line (Gₙ) to electrically connect the drain of the first thin-film transistor of the adjacent pixel unit which is at the same column and at a preceding row and the drain of the first thin-film transistor of the another adjacent pixel unit which is at the same column and at a following row.

In the LCD pixel circuit of the present invention, the capacitor includes a parasitic capacitor, a liquid crystal capacitor and a storage capacitor.

Compared with the conventional technology, each of the pixel units in the present invention is further added with a connecting switch that connects a pixel electrode of an adjacent pixel unit at the preceding row and a pixel electrode of another adjacent pixel unit at the following row so as to increase the overall capacitance, thereby further avoiding the occurrence of feed-through voltage and reducing the risk of image sticking.

### BRIEF DESCRIPTION OF THE DRAWINGS

Fig. 1 is a plane view of an LCD array substrate according to a preferred embodiment of the present invention.
Fig. 2 is a plane view of an LCD array substrate according to another preferred embodiment of the present invention.
Fig. 3 is a partial circuit diagram of an LCD pixel circuit according to a preferred embodiment of the present invention.

### DETAILED DESCRIPTION OF THE PREFERRED EMBODIMENTS

The foregoing objects, features and advantages adopted by the present invention can be best understood by referring to the following detailed description of the preferred embodiments and the accompanying drawings. Furthermore, the directional terms described in the present invention, such as upper, lower, front, rear, left, right, inner, outer, side and etc., are only directions referring to the accompanying drawings, so that the used directional terms are used to describe and understand the present invention, but the present invention is not limited thereto.

In the drawings, similar structural units are designated by the same reference numerals.

Please refer to Fig. 1, which is a plane view of an LCD array substrate according to a preferred embodiment of the present invention. The LCD array substrate includes: a substrate (not shown in the drawing), a plurality of gate lines (marked as Gₙ, Gₙ₊₁, Gₙ₊₂, Gₙ₊₃,... ), and a plurality of data lines (marked as Dₙ, Dₙ₊₁, Dₙ₊₂, Dₙ₊₃,...). The gate lines and the data lines are crossed with each other to form a plurality of pixel units (presented as n, n+1,...). Each of the pixel units (n) is provided with a pixel electrode Pₙ, a first thin-film transistor Tₙ, and a connecting switch Kₙ controlled by the corresponding gate line. The connecting switch Kₙ is disposed between a pixel electrode Pₙ₋₁ of one pixel unit (n-1) which is at the same column and at a preceding row in relation to the pixel unit (n) where the connecting switch Kₙ belongs and a pixel electrode Pₙ₊₁ of another pixel unit (n+1) which is at the same column and at a following row in relation to the pixel unit (n) where the connecting switch Kₙ belongs. The connecting switch Kₙ may connect the pixel electrode Pₙ₋₁ of the pixel unit (n-1) which is at the same column and at a preceding row in relation to the pixel unit (n) where the connecting switch Kₙ belongs and the pixel electrode Pₙ₊₁ of another pixel unit (n+1) which is at the same column and at a following row in relation to the pixel unit (n) where the connecting switch Kₙ belongs. The turn-on or turn-off status of the connecting switch Kₙ is controlled by inputting different electric potentials to the gate line Gₙ, thereby controlling the connection or disconnection between the pixel electrode Pₙ₋₁ of the pixel unit (n-1) which is at the same column and at a preceding row in relation to the pixel unit (n) where the connecting switch Kₙ belongs and the pixel electrode Pₙ₊₁ of another pixel unit (n+1) which is at the same column and at a following row in relation to the pixel unit (n) where the connecting switch Kₙ belongs. A gate of the first thin-film transistor Tₙ is connected to the corresponding gate line Gn; a source thereof is connected to a corresponding data line; a drain thereof is connected to a pixel electrode Pₙ.

Furthermore, the connecting switch Kₙ is preferably a second thin-film transistor Kₙ. The specific structure of the second thin-film transistor Kₙ may be identical to the structure of the first thin-film transistor, but it is not limited thereto.

Specifically, a gate of the second thim-film transistor Kₙ is connected to the corresponding gate line Gₙ; a source thereof is connected to a pixel electrode Pₙ₋₁ of an adjacent pixel unit (n-1) which is at the same column and at a preceding row, and a drain thereof is connected to a pixel electrode Pₙ₊₁ of another adjacent pixel unit (n+1) which is at the same column and at a following row.

In a preferred technical solution of this embodiment, the pixel unit is further provided with metallic lines L; the source of the second thin-film transistor is connected to the pixel electrode Pₙ₋₁ of the adjacent pixel unit (n-1) which is at the same column and at a preceding row through one of the metallic lines L; the drain of the second thin-film transistor is connected to the pixel electrode Pₙ₊₁ of another adjacent pixel unit (n+1) which is at the same column and at a following row through another one of the metallic lines L.

In a preferred technical solution of this embodiment, the metallic lines L are ITO lines. The ITO lines are mounted in the same layer with the pixel electrodes (as shown in Fig. 1); with the ITO lines, the connections of the pixel electrode at the preceding row and the pixel electrode at the following row are achieved.

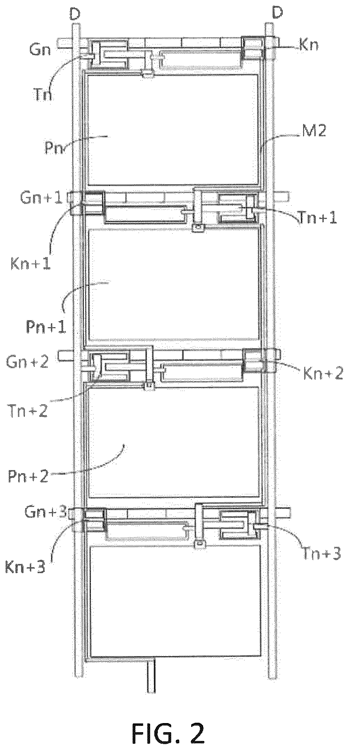

In another preferred technical solution of the present embodiment, as shown in Fig. 2, which is a plane view of an LCD array substrate according to another preferred embodiment of the present invention, the array substrate further includes an M1 metal layer (not shown in the drawing) and an M2 metal layer. The metallic lines are the M2 metallic lines. The metallic lines are mounted in the same layer with the M2 metal layer. With the M2 metallic lines, the connections of the pixel electrode at the preceding row and the pixel electrode at the following row are achieved.

In a preferred technical solution of this embodiment, as shown in Figs. 1 and 2, the first thin-film transistor Tₙ and the second thin-film transistor Kₙ are mounted at two ends of the pixel unit n.

In this embodiment, the specific work principle of the array substrate is:
when charging the pixels at Gₙ row, in a chronological order: Gₙ is inputted with a high electric potential at a preceding period to perform a pre-charging; then Gₙ₊₁ is inputted with a high electric potential; then the data line Dₙ is inputted with an image signal and starts to charge the pixel electrode Pₙ ; since Gₙ₊₁ is currently at a high electric potential, the second thin-film transistor Kₙ₊₁ of the same pixel unit (n) is now turned on so that the pixel electrode Pₙ and the pixel electrode Pₙ₊₂ are connected. At this time, the data line Dₙ is charging four capacitors: C_{lc}, (liquid crystal capacitor) at the n-th row, Cst (storage capacitor), C_{lc} (liquid crystal capacitor) at the (n+2)th row, and Cst (storage capacitor). Under a regular driving, the polarity at the n-th row and at the (n+2)th row are the same, therefore the charging is fast. Gₙ is then closed, and the charging is finished; since at this time the second thin-film transistor Kₙ₊₁ is still turned on, the influence of a feed-through voltage will be equally shared by superposition of the four capacitors. When Gₙ₊₁ is closed, the second thin-film transistor Kₙ₊₁ is turned off, and the pixel electrode Pₙ and the pixel electrode Pₙ₊₂ are disconnected, therefore the charging of the pixel electrode Pₙ₊₂ will not be affected. Since the feed-through voltage ΔV equals to (V_{off} -Vₒₙ)·C_{gs}/ 2^{∗}(C_{gs} +Cₛₜ +C_{lc}), ΔV is much less than normal design.

In this embodiment, each of the pixel units is further added with a connecting switch that connects a pixel electrode of an adjacent pixel unit at the preceding row and a pixel electrode of another adjacent pixel unit at the following row so as to increase the overall capacitance, thereby further avoiding the occurrence of feed-through voltage and reducing the risk of image sticking.

The present invention further provides an LCD panel. The LCD panel includes a color-filter substrate, a liquid crystal layer, and an LCD array substrate; the color-filter substrate is mounted opposite to the LCD array substrate; the liquid crystal layer is mounted between the color-filter substrate and the LCD array substrate. The specific structure and work principle of the LCD array substrate are substantially the same as the description in the foregoing embodiment, and will not be described herein again to avoid redundancy.

In this embodiment, each of the pixel units is further added with a connecting switch that connects a pixel electrode of an adjacent pixel unit at the preceding row and a pixel electrode of another adjacent pixel unit at the following row so as to increase the overall capacitance, thereby further avoiding the occurrence of feed-through voltage and reducing the risk of image sticking.

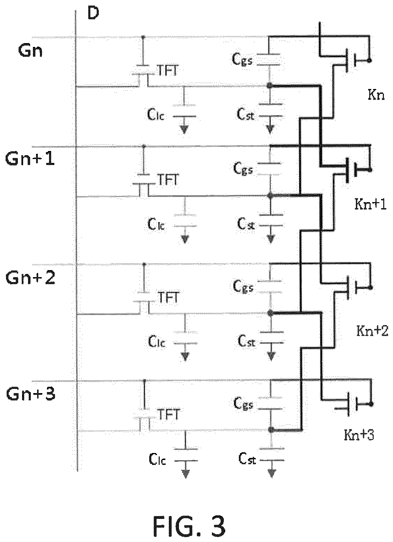

The present invention further provides an LCD pixel circuit, as shown in Fig. 3, which is a partial circuit diagram of an LCD pixel circuit according to a preferred embodiment of the present invention. The LCD pixel circuit includes: a plurality of gate lines G (marked as Gₙ, Gₙ₊₁, Gₙ₊₂, Gₙ₊₃,... ), a plurality of data lines D (marked as Dₙ, Dₙ₊₁, Dₙ₊₂, Dₙ₊₃,...), and a plurality of pixel units (n) defined by the gate lines and the data lines being crossed with each other; each of the pixel units includes: a first thin-film transistor TFT, a capacitor C; the capacitor C is connected to one of the data lines D through the first thin-film transistor TFT; each of the pixel units further includes: a connecting switch K being controlled by the corresponding gate line G. The connecting switch K may connect the pixel electrode Pₙ₋₁ of the pixel unit (n-1) which is at the same column and at a preceding row in relation to the pixel unit (n) where the connecting switch K belongs and the pixel electrode Pₙ₊₁ of another pixel unit (n+1) which is at the same column and at a following row in relation to the pixel unit (n) where the connecting switch K belongs. The turn-on or turn-off status of the connecting switch K is controlled by inputting different electric potentials to the gate line G, thereby controlling the connection or disconnection between the pixel electrode Pₙ₋₁ of the pixel unit (n-1) which is at the same column and at a preceding row in relation to the pixel unit (n) where the connecting switch K belongs and the pixel electrode Pₙ₊₁ of another pixel unit (n+1) which is at the same column and at a following row in relation to the pixel unit (n) where the connecting switch K belongs. A gate of the first thin-film transistor Tₙ is connected to the corresponding gate line Gₙ; a source thereof is connected to a corresponding data line; a drain thereof is connected to a pixel electrode Pₙ.

Furthermore, the connecting switch Kₙ is preferably a second thin-film transistor Kₙ. The specific structure of the second thin-film transistor Kₙ may be identical to the structure of the first thin-film transistor, but it is not limited thereto.

Specifically, a gate of the second thim-film transistor Kₙ is connected to the corresponding gate line Gₙ; a source thereof is connected to a pixel electrode Pₙ₋₁ of an adjacent pixel unit (n-1) which is at the same column and at a preceding row, and a drain thereof is connected to a pixel electrode Pₙ₊₁ of another adjacent pixel unit (n+1) which is at the same column and at a following row.

Specifically, the capacitor C includes a parasitic capacitor C_{gs}, a liquid crystal capacitor C_{lc} and a storage capacitor Cₛₜ. An end of the parasitic capacitor C_{gs} is connected to the corresponding gate line; another end of thereof is connected to the pixel electrode and the drain of the first thin-film transistor TFT. The parasitic capacitor C_{gs}, the liquid crystal capacitor C_{lc} and the storage capacitor Cst are all connected to the data line through the first thin-film transistor TFT.

The work principle of the pixel circuit of the embodiment is as follows:
when charging the pixels at Gₙ row, in a chronological order: Gₙ is inputted with a high electric potential at a preceding period to perform a pre-charging; then Gₙ₊₁ is inputted with a high electric potential; then the data line Dₙ is inputted with an image signal and starts to charge the pixel electrode Pₙ ; since Gₙ₊₁ is currently at a high electric potential, the second thin-film transistor Kₙ₊₁ of the same pixel unit (n) is now turned on so that the pixel electrode Pₙ and the pixel electrode Pₙ₊₂ are connected. At this time, the data line Dₙ is charging four capacitors: C_{lc} (liquid crystal capacitor) at the n-th row, Cst (storage capacitor), C_{lc} (liquid crystal capacitor) at the (n+2)th row, and Cst (storage capacitor). Under a regular driving, the polarity at the n-th row and at the (n+2)th row are the same, therefore the charging is fast. Gₙ is then closed, and the charging is finished; since at this time the second thin-film transistor Kₙ₊₁ is still turned on, the influence of a feed-through voltage will be equally shared by superposition of the four capacitors. When Gₙ₊₁ is closed, the second thin-film transistor Kₙ₊₁ is turned off, and the pixel electrode Pₙ and the pixel electrode Pₙ₊₂ are disconnected, therefore the charging of the pixel electrode Pₙ₊₂ will not be affected. Since the feed-through voltage ΔV equals to (V_{off} -Vₒₙ)·C_{gs}/ 2^{∗}(C_{gs} +Cₛₜ +C_{lc}), ΔV is much less than normal design.

In the present invention, each of the pixel units is further added with a connecting switch that connects a pixel electrode of an adjacent pixel unit at the preceding row and a pixel electrode of another adjacent pixel unit at the following row so as to increase the overall capacitance, thereby further avoiding the occurrence of feed-through voltage and reducing the risk of image sticking.

In conclusion, although the present invention has been described with reference to the preferred embodiment thereof, it is apparent to those skilled in the art that a variety of modifications and changes may be made without departing from the scope of the present invention which is intended to be defined by the appended claims.

## Claims

1. An LCD array substrate comprising : a substrate and a plurality of gate lines (Gₙ, Gₙ₊₁, Gₙ₊₂, Gₙ₊₃) and data lines (D), wherein the gate lines (Gₙ, Gₙ₊₁, Gₙ₊₂, Gₙ₊₃) and the data lines (D) are crossed with each other to form a plurality of pixel units and the gate lines (Gₙ, Gₙ₊₁, Gₙ₊₂, Gₙ₊₃) define the row and the data lines (D) define the columns of the LCD array; each of the pixel units is provided with a pixel electrode (Pₙ, Pₙ₊₁, Pₙ₊₂), a first thin-film transistor (Tₙ, Tₙ₊₁, Tₙ₊₂, Tₙ₊₃), and a connecting switch (Kₙ, Kₙ₊₁, Kₙ₊₂, Kₙ₊₃); the first thin-film transistor (Tₙ, Tₙ₊₁, Tₙ₊₂, Tₙ₊₃) is connected to the gate line, the data line, and the pixel electrode corresponding to the pixel unit ; the connecting switch (Kₙ) is connected to and controlled by the gate line (Gₙ, Gₙ₊₁, Gₙ₊₂, Gₙ₊₃) corresponding to the pixel unit and is disposed between the pixel electrode (Pn-1) of one pixel unit which is the pixel unit which is at the same column and at a preceding row in relation to the pixel unit where the connecting switch (Kₙ) belongs and the pixel electrode (Pₙ₊₁) of another pixel unit which is the pixel unit which is at the same column and at a following row in relation to the pixel unit where the connecting switch (Kₙ) belongs; and **characterized in that** the connecting switch (Kₙ) is adapted to electrically connect and disconnect the pixel electrode (Pn-1) of said one pixel unit and the pixel electrode (Pn+1) of said another pixel unit.

2. The LCD array substrate as claimed in claim 1, **characterized in that** the connecting switch (Kₙ) is a second thin-film transistor (Kₙ); a gate of the second thin-film transistor (Kₙ) is connected to the gate line (Gₙ) in the pixel unit where the second thin-film transistor (Kₙ) belongs, a source thereof is connected to the pixel electrode (Pₙ₋₁) of said one pixel unit, and a drain thereof is connected to the pixel electrode (Pₙ₊₁) of said another pixel unit.

3. The LCD array substrate as claimed in claim 2, **characterized in that** each of the pixel units is further provided with metallic lines; the source of the second thin-film transistor (Kₙ) is connected to the pixel electrode (Pₙ₋₁) of said one pixel unit through one of the metallic lines; the drain of the second thin-film transistor (Kₙ) is connected to the pixel electrode (Pₙ₊₁) of said another pixel unit.

4. The LCD array substrate as claimed in claim 3, **characterized in that** each of the pixel units further includes a metal layer; the metallic lines are mounted in the same layer with the metal layer.

5. An LCD panel, **characterized in that** the LCD panel comprises a color-filter substrate, a liquid crystal layer and further comprising an LCD array substrate as claimed in claim 1, wherein the color-filter substrate is mounted opposite to the LCD array substrate; the liquid crystal layer is mounted between the color-filter substrate and the LCD array substrate.

6. An LCD pixel circuit comprising : a plurality of gate lines (Gₙ, Gₙ₊₁, Gₙ₊₂, Gₙ₊₃), a plurality data lines (D), a plurality of pixel units defined by the gate lines (Gₙ, Gₙ₊₁, Gₙ₊₂, Gₙ₊₃) and the data lines (D) being crossed with each other, wherein the gate lines (Gₙ, Gₙ₊₁, Gₙ₊₂, Gₙ₊₃) define the row and the data lines (D) define the columns of the LCD pixel circuit; each of the pixel units includes: a first thin-film transistor (Tₙ, Tₙ₊₁, Tₙ₊₂, Tₙ₊₃), a capacitor; the capacitor is connected to the drain of the first thin film transistor (Tₙ, Tₙ₊₁,Tₙ₊₂, Tₙ₊₃) and to the data line (D) corresponding to the pixel unit through the drain of the first thin-film transistor (Tₙ, Tₙ₊₁, Tₙ₊₂, Tₙ₊₃) ; each of the pixel units further includes: a connecting switch (Kₙ, Kₙ₊₁, Kₙ₊₂, Kₙ₊₃) that is adapted to be controlled by the gate line corresponding to the pixel unit and **characterized in that** the control switch is adapted to control the connection or disconnection of the drain of the first thin-film transistor (Tₙ₋₁) of an adjacent pixel unit which is at the same column and at a preceding row in relation to the pixel unit where the connecting switch (Kₙ) belongs and the drain of the first thin-film transistor (Tₙ₋₁) of another adjacent pixel unit which is at the same column and at a following row in relation to the pixel unit where the connecting switch belongs (Kₙ) according to the gate signal on the corresponding gate line (Gₙ, Gₙ₊₁, Gₙ₊₂, Gₙ₊₃).

7. The pixel circuit as claimed in claim 6, **characterized in that** the connecting switch (Kₙ) is a second thin-film transistor (Kₙ); a gate of the second thin-film transistor (Kₙ) is connected to a gate line (Gₙ) in the pixel unit where the second thin-film transistor (Kₙ) belongs, a source thereof is connected to a drain of a first thin-film transistor (Tₙ₋₁) of an adjacent pixel unit which is at the same column and at a preceding row, and a drain of the second thin-film transistor (Kₙ) is connected to a drain of a first thin-film transistor (Tₙ₊₁) of another adjacent pixel unit which is at the same column and at a following row.

8. The pixel circuit as claimed in claim 7, **characterized in that** the second thin-film transistor (Kₙ) is configured to be turned on by an input with a high electric potential to the gate line (Gₙ) to electrically connect the drain of the first thin-film transistor (Tₙ₋₁) of the adjacent pixel unit which is at the same column and at a preceding row and the drain of the first thin-film transistor (Tₙ₊₁) of the another adjacent pixel unit which is at the same column and at a following row.

9. The pixel circuit as claimed in claim 6, **characterized in that** the capacitor includes a parasitic capacitor (C_{gs}), a liquid crystal capacitor (C_{lc}) and a storage capacitor (Cst).

## Patentansprüche

1. LCD-Array-Substrat umfassend:
ein Substrat und eine Vielzahl von Gate-Leitungen (Gₙ, Gₙ₊₁, Gₙ₊₂, Gₙ₊₃) und Datenleitungen (D),
wobei die Gate-Leitungen (Gₙ, Gₙ₊₁, Gₙ₊₂, Gₙ₊₃) und die Datenleitungen (D) miteinander gekreuzt sind, um eine Vielzahl von Pixeleinheiten zu bilden, und die Gate-Leitungen (Gₙ, Gₙ₊₁, Gₙ₊₂, Gₙ₊₃) die Zeile und die Datenleitungen (D) die Spalten des LCD-Arrays definieren;
jede der Pixeleinheiten mit einer Pixelelektrode (Pₙ, Pₙ₊₁, Pₙ₊₂), einem ersten Dünnschichttransistor (Tₙ, Tₙ₊₁, Tₙ₊₂, Tₙ₊₃) und einem Verbindungsschalter (Kₙ, Kₙ₊₁, Kₙ₊₂, Kₙ₊₃) versehen ist;
der erste Dünnschichttransistor (Tₙ, Tₙ₊₁, Tₙ₊₂, Tₙ₊₃) mit der Gate-Leitung, der Datenleitung und der Pixelelektrode entsprechend der Pixeleinheit verbunden ist;
der Verbindungsschalter (Kₙ) mit der Gate-Leitung (Gₙ, Gₙ₊₁, Gₙ₊₂, Gₙ₊₃), die der Pixeleinheit entspricht, verbunden ist und von dieser gesteuert wird und zwischen der Pixelelektrode (Pₙ₋₁) einer Pixeleinheit, die die Pixeleinheit ist, die sich in derselben Spalte und in einer vorhergehenden Zeile in Bezug auf die Pixeleinheit befindet, zu der der Verbindungsschalter (Kₙ) gehört, und der Pixelelektrode (Pₙ₊₁) einer anderen Pixeleinheit, die die Pixeleinheit ist, die sich in derselben Spalte und in einer folgenden Zeile in Bezug auf die Pixeleinheit befindet, zu der der Verbindungsschalter (Kₙ) gehört, angeordnet ist;
und **dadurch gekennzeichnet, dass** der Verbindungsschalter (Kₙ) eingerichtet ist, die Pixelelektrode (Pₙ₋₁) der einen Pixeleinheit und die Pixelelektrode (Pₙ₊₁) der anderen Pixeleinheit elektrisch zu verbinden und zu trennen.

2. LCD-Array-Substrat nach Anspruch 1, **dadurch gekennzeichnet, dass** der Verbindungsschalter (Kₙ) ein zweiter Dünnschichttransistor (Kₙ) ist;
ein Gate des zweiten Dünnschichttransistors (Kₙ) mit der Gate-Leitung (Gₙ) in der Pixeleinheit verbunden ist, zu der der zweite Dünnschichttransistor (Kₙ) gehört, eine Source desselben mit der Pixelelektrode (Pₙ₋₁) der einen Pixeleinheit verbunden ist und ein Drain desselben mit der Pixelelektrode (Pₙ₊₁) der anderen Pixeleinheit verbunden ist.

3. LCD-Array-Substrat nach Anspruch 2, **dadurch gekennzeichnet, dass** jede der Pixeleinheiten ferner mit metallischen Leitungen versehen ist;
die Source des zweiten Dünnschichttransistors (Kₙ) mit der Pixelelektrode (Pₙ₋₁) der einen Pixeleinheit durch eine der metallischen Leitungen verbunden ist;
der Drain des zweiten Dünnschichttransistors (Kₙ) mit der Pixelelektrode (Pₙ₊₁) der anderen Pixeleinheit verbunden ist.

4. LCD-Array-Substrat nach Anspruch 3, **dadurch gekennzeichnet, dass** jede der Pixeleinheiten ferner eine Metallschicht beinhaltet;
die metallischen Leitungen in der gleichen Schicht wie die Metallschicht angebracht sind.

5. LCD-Panel, **dadurch gekennzeichnet, dass** das LCD-Panel ein Farbfiltersubstrat, eine Flüssigkristallschicht und ferner ein LCD-Array-Substrat nach Anspruch 1 umfasst, wobei das Farbfiltersubstrat gegenüber dem LCD-Array-Substrat angebracht ist;
die Flüssigkristallschicht zwischen dem Farbfiltersubstrat und dem LCD-Array-Substrat angebracht ist.

6. LCD-Pixelschaltung umfassend:
eine Vielzahl von Gate-Leitungen (Gₙ, Gₙ₊₁, Gₙ₊₂, Gₙ₊₃), eine Vielzahl von Datenleitungen (D), eine Vielzahl von Pixeleinheiten, die durch die Gate-Leitungen (Gₙ, Gₙ₊₁, Gₙ₊₂, Gₙ₊₃) und die Datenleitungen (D) definiert sind, die miteinander gekreuzt sind, wobei die Gate-Leitungen (Gₙ, Gₙ₊₁, Gₙ₊₂, Gₙ₊₃) die Zeile und die Datenleitungen (D) die Spalten der LCD-Pixelschaltung definieren;
wobei jede der Pixeleinheiten beinhaltet:
einen ersten Dünnschichttransistor (Tₙ, Tₙ₊₁, Tₙ₊₂, Tₙ₊₃), einen Kondensator,
wobei der Kondensator mit dem Drain des ersten Dünnschichttransistors (Tₙ, Tₙ₊₁, Tₙ₊₂, Tₙ₊₃) und mit der Datenleitung (D), die der Pixeleinheit entspricht, über den Drain des ersten Dünnschichttransistors (Tₙ, Tₙ₊₁, Tₙ₊₂, Tₙ₊₃) verbunden ist;
wobei jede der Pixel einheiten ferner beinhaltet:
einen Verbindungsschalter (Kₙ, Kₙ₊₁, Kₙ₊₂, Kₙ₊₃), der eingerichtet ist, von der der Pixeleinheit entsprechenden Gate-Leitung gesteuert zu werden,
und **dadurch gekennzeichnet, dass** der Steuerschalter eingerichtet ist, die Verbindung oder die Trennung des Drains des ersten Dünnschichttransistors (Tₙ₋₁) einer benachbarten Pixeleinheit, die sich in derselben Spalte und in einer vorhergehenden Zeile in Bezug auf die Pixeleinheit befindet, zu der der Verbindungsschalter (Kₙ) gehört, und des Drains des ersten Dünnschichttransistors (Tₙ₋₁) einer anderen benachbarten Pixeleinheit, die sich in derselben Spalte und in einer folgenden Zeile in Bezug auf die Pixeleinheit befindet, zu der der Verbindungsschalter (Kₙ) gehört, gemäß dem Gatesignal auf der entsprechenden Gate-Leitung (Gₙ, Gₙ₊₁, Gₙ₊₂, Gₙ₊₃) zu steuern.

7. Pixelschaltung nach Anspruch 6, **dadurch gekennzeichnet, dass** der Verbindungsschalter (Kₙ) ein zweiter Dünnschichttransistor (Kₙ) ist; ein Gate des zweiten Dünnschichttransistors (Kₙ) mit einer Gate-Leitung (Gₙ) in der Pixeleinheit verbunden ist, zu der der zweite Dünnschichttransistor (Kₙ) gehört, eine Source desselben mit einem Drain eines ersten Dünnschichttransistors (Tₙ₋₁) einer benachbarten Pixeleinheit verbunden ist, die sich in derselben Spalte und in einer vorhergehenden Zeile befindet, und ein Drain des zweiten Dünnschichttransistors (Kₙ) mit einem Drain eines ersten Dünnschichttransistors (Tₙ₊₁) einer anderen benachbarten Pixeleinheit verbunden ist, die sich in derselben Spalte und in einer folgenden Zeile befindet.

8. Pixelschaltung nach Anspruch 7, **dadurch gekennzeichnet, dass** der zweite Dünnschichttransistor (Kₙ) so konfiguriert ist, dass er durch eine Eingabe mit einem hohen elektrischen Potential an der Gate-Leitung (Gₙ) eingeschaltet wird, um den Drain des ersten Dünnschichttransistors (Tₙ₋₁) der benachbarten Pixeleinheit, die sich in derselben Spalte und in einer vorhergehenden Zeile befindet, und den Drain des ersten Dünnschichttransistors (Tₙ₊₁) der anderen benachbarten Pixeleinheit, die sich in derselben Spalte und in einer folgenden Zeile befindet, elektrisch zu verbinden.

9. Pixelschaltung nach Anspruch 6, **dadurch gekennzeichnet, dass** der Kondensator einen parasitären Kondensator (C_{gs}), einen Flüssigkristallkondensator (C_{lc}) und einen Speicherkondensator (Cst) beinhaltet.

## Revendications

1. Substrat de matrice LCD comprenant :
un substrat et une pluralité de lignes de grille (Gₙ, Gₙ₊₁, Gₙ₊₂, Gₙ₊₃) et de lignes de données (D), où les lignes de grille (Gₙ, Gₙ₊₁, Gₙ₊₂, Gₙ₊₃) et les lignes de données (D) se croisent pour former une pluralité d'unités de pixel et les lignes de grille (Gₙ, Gₙ₊₁, Gₙ₊₂, Gₙ₊₃) définissent la rangée et les lignes de données (D) définissent les colonnes de la matrice LCD ; chacune des unités de pixel est dotée d'une électrode de pixel (Pₙ, Pₙ₊₁, Pₙ₊₂), d'un premier transistor à couches minces (Tₙ, Tₙ₊₁, Tₙ₊₂, Tₙ₊₃), et d'un commutateur de connexion (Kₙ, Kₙ₊₁, Kₙ₊₂, Kₙ₊₃) ; le premier transistor à couches minces (Tₙ, Tₙ₊₁, Tₙ₊₂, Tₙ₊₃) est connecté à la ligne de grille, à la ligne de données et à l'électrode de pixel correspondant à l'unité de pixel ; le commutateur de connexion (Kₙ) est connecté à et commandé par la ligne de grille (Gₙ, Gₙ₊₁, Gₙ₊₂, Gₙ₊₃) correspondant à l'unité de pixel et est disposé entre l'électrode de pixel (Pn-1) d'une première unité de pixel qui est l'unité de pixel qui est à la même colonne et à une rangée précédente par rapport à l'unité de pixel à laquelle appartient le commutateur de connexion (Kₙ) et l'électrode de pixel (Pₙ₊₁) d'une autre unité de pixel qui est l'unité de pixel qui est à la même colonne et à une rangée suivante par rapport à l'unité de pixel à laquelle appartient le commutateur de connexion (Kₙ) ; et **caractérisé en ce que** le commutateur de connexion (Kₙ) est adapté pour connecter et déconnecter électriquement l'électrode de pixel (Pn-1) de ladite première unité de pixel et l'électrode de pixel (Pn+1) de ladite autre unité de pixel.

2. Substrat de matrice LCD tel que revendiqué dans la revendication 1, **caractérisé en ce que** le commutateur de connexion (Kₙ) est un deuxième transistor à couches minces (Kₙ) ; une grille du deuxième transistor à couches minces (Kₙ) est connectée à la ligne de grille (Gₙ) dans l'unité de pixel à laquelle appartient le deuxième transistor à couches minces (Kₙ), une source de celui-ci est connectée à l'électrode de pixel (Pₙ₋₁) de ladite première unité de pixel, et un drain de celui-ci est connecté à l'électrode de pixel (Pₙ₊₁) de ladite autre unité de pixel.

3. Substrat de matrice LCD tel que revendiqué dans la revendication 2, **caractérisé en ce que** chacune des unités de pixel est en outre dotée de lignes métalliques ; la source du deuxième transistor à couches minces (Kₙ) est connectée à l'électrode de pixel (Pₙ₋₁) de ladite première unité de pixel par l'une des lignes métalliques ; le drain du deuxième transistor à couches minces (Kₙ) est connecté à l'électrode de pixel (Pₙ₊₁) de ladite autre unité de pixel.

4. Substrat de matrice LCD tel que revendiqué dans la revendication 3, **caractérisé en ce que** chacune des unités de pixel comprend en outre une couche de métal ; les lignes métalliques sont montées dans la même couche avec la couche de métal.

5. Panneau LCD, **caractérisé en ce que** le panneau LCD comprend un substrat de filtre coloré, une couche de cristaux liquides et comprenant en outre un substrat de matrice LCD tel que revendiqué dans la revendication 1, dans lequel le substrat de filtre coloré est monté à l'opposé du substrat de matrice LCD ; la couche de cristaux liquides est montée entre le substrat de filtre coloré et le substrat de matrice LCD.

6. Circuit de pixels LCD comprenant :
une pluralité de lignes de grille (Gn, Gₙ₊₁, Gₙ₊₂, Gₙ₊₃), une pluralité de lignes de données (D), une pluralité d'unités de pixel définies par les lignes de grille (Gₙ, Gₙ₊₁, Gₙ₊₂, Gₙ₊₃) et les lignes de données (D) se croisant, où les lignes de grille (Gₙ, Gₙ₊₁, Gₙ₊₂, Gₙ₊₃) définissent la rangée et les lignes de données (D) définissent les colonnes du circuit de pixels LCD ;
chacune des unités de pixel comprend : un premier transistor à couches minces (Tₙ, Tₙ₊₁, Tₙ₊₂, Tₙ₊₃), un condensateur ; le condensateur est connecté au drain du premier transistor à couches minces (Tₙ, Tₙ₊₁, Tₙ₊₂, Tₙ₊₃) et à la ligne de données (D) correspondant à l'unité de pixel par le drain du premier transistor à couches minces (Tₙ, Tₙ₊₁, Tₙ₊₂, Tₙ₊₃) ; chacune des unités de pixel comprend en outre :
un commutateur de connexion (Kₙ, Kₙ₊₁, Kₙ₊₂, Kₙ₊₃) qui est adapté pour être commandé par la ligne de grille correspondant à l'unité de pixel et **caractérisé en ce que** le commutateur de commande est adapté pour commander la connexion ou la déconnexion du drain du premier transistor à couches minces (Tₙ₋₁) d'une unité de pixel adjacente qui est à la même colonne et à une rangée précédente par rapport à l'unité de pixel à laquelle appartient le commutateur de connexion (Kₙ) et du drain du premier transistor à couches minces (Tₙ₋₁) d'une autre unité de pixel adjacente qui est à la même colonne et à une rangée suivante par rapport à l'unité de pixel à laquelle appartient le commutateur de connexion (Kₙ) en fonction du signal de grille sur la ligne de grille correspondante (Gₙ, Gₙ₊₁, Gₙ₊₂, Gₙ₊₃).

7. Circuit de pixels tel que revendiqué dans la revendication 6, **caractérisé en ce que** le commutateur de connexion (Kₙ) est un deuxième transistor à couches minces (Kₙ) ; une grille du deuxième transistor à couches minces (Kₙ) est connectée à une ligne de grille (Gₙ) dans l'unité de pixel à laquelle appartient le deuxième transistor à couches minces (Kₙ), une source de celui-ci est connectée à un drain d'un premier transistor à couches minces (Tₙ₋₁) d'une unité de pixel adjacente qui est à la même colonne et à une rangée précédente, et un drain du deuxième transistor à couches minces (Kₙ) est connecté à un drain d'un premier transistor à couches minces (Tₙ₊₁) d'une autre unité de pixel adjacente qui est à la même colonne et à une rangée suivante.

8. Circuit de pixels tel que revendiqué dans la revendication 7, **caractérisé en ce que** le deuxième transistor à couches minces (Kₙ) est configuré pour être activé par une entrée à haut potentiel électrique de la ligne de grille (Gₙ) pour connecter électriquement le drain du premier transistor à couches minces (Tₙ₋₁) de l'unité de pixel adjacente qui est à la même colonne et à une rangée précédente et le drain du premier transistor à couches minces (Tₙ₊₁) de l'autre unité de pixel adjacente qui est à la même colonne et à une rangée suivante.

9. Circuit de pixels tel que revendiqué dans la revendication 6, **caractérisé en ce que** le condensateur comprend un condensateur parasite (C_{gs}), un condensateur à cristaux liquides (C_{lc}) et un condensateur de stockage (Cst).
